# EUROPÄISCHE PATENTSCHRIFT

(11) **EP 1 561 981 B1**
(45) Veröffentlichungstag und Bekanntmachung des Hinweises auf die Patenterteilung: **07.01.2015**
(21) Anmeldenummer: 05000456.3
(22) Anmeldetag: 12.01.2005
(51) Int. Cl.: F16K 17/04

(54) **Druckbegrenzungsventil**
Pressure limiting valve
Soupape de limitation de pression

(30) Priorität: 05.02.2004 DE 102004005745
(43) Veröffentlichungstag der Anmeldung: 10.08.2005
(73) Patentinhaber: Voss, Wolfgang, 58239 Schwerte (DE)
(72) Erfinder: Voss, Wolfgang, 58239 Schwerte (DE)
(74) Vertreter: Schulte, Jörg

(56) Entgegenhaltungen:
- DE-A1- 1 650 299
- DE-A1- 3 830 075
- GB-A- 1 037 327
- US-A- 3 344 806
- US-A- 3 762 433
- US-A- 4 176 680
- US-A- 4 699 171

## Beschreibung

Die Erfindung betrifft ein Druckbegrenzungsventil zum Schutz von Hydraulikaggregaten gegen schädliche Überlast, insbesondere zum Schutz des hydraulischen Strebausbaus gegen Gebirgsschlag und andere plötzlich auftretende Überlast, mit einem Ventilgehäuse mit Anschluss, wobei die Eingangs- und Ausgangsseite des Ventilgehäuses durch ein gegen die Kraft einer Ventilfeder verschiebliches und eine Dichtung aufweisendes Verschlussteil voneinander getrennt und bei auftretender Überlast zum Abführen der Druckflüssigkeit miteinander verbunden sind, wobei zwischen Eingangsseite mit Zentralbohrung und Radialbohrungen und Ausgangsseite eine Kammer vorgesehen und das Verschlussteil von einem mit dem Anschluss verbundenen Kolben und dem diesen umfassenden und darauf verschieblich angeordneten dementsprechend zylinderartig ausgebildeten Ventilfederteller gebildet ist.

Derartige Druckbegrenzungsventile sind unter anderem aus der DE 199 46 848 A1 bekannt. Insbesondere im untertägigen Steinkohlenbergbau werden für die Absicherung der Hohlräume im Streb Schildausbaugestelle mit einem oder mehreren Hydraulikstempeln eingesetzt, die gegen die beschriebene Überlast durch Druckbegrenzungsventile geschützt werden müssen. Diese Druckbegrenzungsventile sind so ausgelegt und aufgebaut, dass bei auftretender Überlast ein in einer Bohrung verschieblich angeordneter Ventilkolben gegen den Federteller gedrückt wird, wobei er bei entsprechend hoher Überlast den Federteller gegen die Kraft der Feder verschiebt und dabei einen Dichtring überfährt, bis die in ihm ausgebildeten Radialbohrungen eine Verbindung zwischen der Sackbohrung im Ventilkolben und den Austrittsbohrungen herstellt, sodass die Druckflüssigkeit abfließen und das gesamte Hydraulikaggregat entlasten kann. Ist die Überlast dann abgebaut, drückt die Ventilfeder den Federteller und damit den Ventilkolben in seine Ausgangslage zurück, sodass in der nun wieder geschlossenen Sackbohrung der Systemdruck ansteht, ohne auf andere Teile des Druckbegrenzungsventils Einfluss nehmen zu können. Bei der in der DE 199 46 848 A1 gezeigten Ausführung ist ein Doppelkolben und zwischen beiden eine Dämpfungskammer, die beim Öffnen des Ventils in Folge Überlast gleichzeitig mit Druckflüssigkeit beaufschlagt wird und dabei die Bewegung des Federtellers mit unterstützt. Beim Wiederschließen des Druckbegrenzungsventils sorgt diese Dämpfungskammer dann dafür, dass die Ventilfeder nur gedämpft in die Ausgangslage zurückfahren kann. Damit soll auch gleichzeitig ein Flattern verhindert werden, was vor allem beim Öffnungsvorgang und beim Schließvorgang auftreten kann. Nachteilig ist aber, dass diese Druckausgleichskammer im druckausgeglichenen Zustand des Druckbegrenzungsventils leer laufen kann, sodass dann beim Ansprechen des Ventils ein gleichmäßiges Befüllen nicht gesichert ist. Insbesondere kann es bei dieser Art der Druckbegrenzungsventile auch zu Schäden durch eine hydraulische Selbstzerstörung kommen, insbesondere ist aber nachteilig, dass mit mehreren Verschlussteilen gearbeitet wird, um den beschriebenen, möglichst gleichförmigen Öffnungs- und Schließvorgang des Druckbegrenzungsventils zu erreichen. Aus der Ölhydraulik sind Ventile nach US-A-3 344 806 und der US-A -4 699 171 bekannt, die keine Überfahrdichtungen aufweisen, so dass ein ausreichender Druck nicht aufgebaut werden kann. Bei der US-A-3 344 806 ist ein Rückschlag- und kein Druckbegrenzungsventil gezeigt. Weiter hat dieses Ventil lediglich die Aufgabe, die Durchflussmenge zu kontrollieren und nicht eine Dämpfung zu bewirken. Bei der US-A-4 699 171 erfolgt die Vorspannung nicht über den Systemdruck, sondern durch andere Quellen, und über den nicht feststehenden Kolben werden mehrere Anschlüsse bedient. Das in der GB 1 037 327 - A 1 gezeigte Ventil ist ein rein pneumatisches Ventil in Ausbildung als Sitzventil. Wie bei der DE 16 50 299 A 1 auch ist keine Dämpfungskammer vorgesehen, sondern das Verschlussteil wird auf eine Scheibe aus Dichtungswerkstoff gedrückt. Diese Ventile sind nur für geringe Durchflussmengen einsetzbar, eignen sich von daher nicht als Druckbegrenzungsventil. Es sind nur Schiebeventile, wobei der Kolben kegelig endet und schon aus diesem Grunde nur geringe Durchflussmengen zulässt. Die im Einfluss des Druckes bleibende Dichtung kann ein Flattern des Ventils nicht verhindern. Auch das Ventil gemäß US-A-4 176 680 ist ein Rückschlag- und kein Druckbegrenzungsventil. Es erfüllt somit ganz andere Aufgaben. Weiter muss der Kolben einen relativ großen Weg zurücklegen, bevor das Ventil öffnet und schließt, und die Ausbildung des Ventils ist vor allem dadurch gekennzeichnet, dass auch das Verschlussteil einen Kolben aufweist, so dass der hutförmige Teil nur Führungsfunktionen erfüllt. Alle diese Lösungen sind entweder für andere Bereiche vorgesehen oder bauen sehr aufwändig; allen gemein ist, dass sie den besonderen Auflagen des Untertageeinsatzes wegen fehlender Funktionssicherheit nicht genügen.

Der Erfindung liegt daher die Aufgabe zugrunde, ein Druckbegrenzungsventil zu schaffen, das einfach baut und bei dem die Gefahr einer hydraulischen Zerstörung weitgehend verhindert ist.

Die Aufgabe wird gemäß der Erfindung mit den Merkmalen des Anspruchs 1 gelöst.

Bei dieser Ausbildung des Druckbegrenzungsventils ist die Dämpfung aus dem Systemdruck heraus gesichert ist, sodass damit sichergestellt ist, dass beim Schließen des Druckbegrenzungsventils aber auch beim Öffnen jedwedes Flattern und ungleichmäßiges Bewegen ausgeschlossen ist. Sowohl beim Öffnen wie beim Schließen des Ventils ist immer ein das Flattern verhindernder Druck im Bereich der Dämpfungskammer vorhanden. Die Dichtung ist in einer sie sichernden Nut untergebracht, sodass nur ein begrenzter Teil, nämlich der an der Kontaktfläche des Kolbens anliegende Teil durch "Reibung" beeinflusst wird. Bei dieser Ausbildung kann die Dichtung in der Nut auch über die Radialbohrungen hinwegfahren, um dann erst beim Entlasten des Druckbegrenzungsventils in die Ausgangslage zurück gedrückt zu werden, wobei dann eine ausreichende Abdichtringfläche vorgegeben ist, die die wirkungsvolle Abdichtung sicherstellen kann. Andererseits ist die vorgegebene Abdichtringfläche so bemessen, dass ein schnelles Ansprechen des Druckbegrenzungsventils also schon nach einem relativ kurzen Verschiebeweg möglich ist, was aufgrund der besonderen Ausbildung der Ventilfeder möglich ist. Die Feder spricht in allen Bereichen, d. h. auch schon nach einem relativ kurzen Spannweg sicher an, sodass sich die Dichtung dann bei weiterem Verschieben des Ventilfedertellers wiederum abdichtend im Bereich der Kontaktflächen auswirken kann. Vorteilhaft kann auf bewegliche Teile im Bereich des Anschlusses völlig verzichtet werden, d. h. insbesondere auf den in der Bohrung verschieblich angeordneten Ventilkolben. Stattdessen wird der sowieso benötigte und sich auf und ab bewegende Ventilfederteller so ausgebildet, dass er das Endstück des Anschlusses, d. h. den damit verbundenen Kolben umfasst und gegen die Kraft der Ventilfeder bei auftretender Überlast verschoben wird. Vorteilhaft ergibt sich bei dieser Ausbildung sicher ein Dämpfungseffekt, der durch die immer über den Systemdruck gefüllte Dämpfungskammer gewährleistet ist, was mit dem Öffnen des Druckbegrenzungsventils einsetzt, ohne dass es also einer vollständigen Öffnung des Ventils bedarf. Dadurch ist beim Wiederschließen des Druckbegrenzungsventils sichergestellt, dass immer ein aus Hydraulikflüssigkeit bzw. Druckflüssigkeit bestehendes Polster vorhanden ist, das dann über die Feder abgebaut werden muss, bevor eine vollständige Schließung des Druckbegrenzungsventils erreicht wird. Kolben und Ventilfederteller weisen für Stangendichtungen vorgesehene und geeignete glatte Kontaktflächen auf, sodass mit den bekannten O-Ringen und ähnlichen Dichtringen gearbeitet werden kann, nur dass hier die Dichtungen nicht dem Ventilkolben zugeordnet sind, sondern vielmehr dem hutförmig bzw. zylinderartig ausgebildeten Kopfteil des Ventilfedertellers. Außerdem können so gewisse Mengen an Druckflüssigkeit direkt über eine später noch beschriebene Bohrung und/oder an den Kontaktflächen vorbei über einen Versorgungsdurchfluss in den Bereich der schon erwähnten Dämpfungskammer gelangen, um die beschriebene Dämpfungswirkung sicherzustellen.

Eine besonders zweckmäßige Ausbildung des erwähnten Kolbens ist die, bei der der Kolben ein Teil des Anschlusses ist. Kolben und Anschluss bilden also eine Einheit, wobei der Kolben entsprechend weit über den Anschlussgrund vorsteht, sodass er sicher von dem zylinderartigen Kopfteil des Ventiltellers umfasst werden kann.

Wie weiter vorne schon erwähnt umfasst der Ventilfederteller den dem Anschluss zugeordneten Kolben, sodass er sich gezielt und gleichmäßig bei auftretender Überlast bewegen kann, um die Ventilfeder weiter vorzuspannen. Diese gleichmäßige Führung und die vorteilhafte Ausbildung ist insbesondere dann erreicht, wenn der Ventilfederteller hutförmig mit Hutrand ausgebildet ist, wobei sich die Ventilfeder auf den Hutrand abstützt. Das zylinderartige Kopfteil des Ventilfedertellers ist den Kolben einfassend geformt und angeordnet. Die entsprechende Ausnehmung im Ventilfederteller kann durch eine Sackbohrung dargestellt werden oder durch entsprechende Formgebung bei der Herstellung des Ventilfedertellers. Der Teil des Anschlusses darstellende Kolben kann so die schon erwähnte Führungsaufgabe für den Ventilfederteller übernehmen, wobei seine übrigen Funktionen dadurch nicht beeinträchtigt sind. Vielmehr ist sichergestellt, dass auch diese weiteren Funktionen wie die Trennung der Eintrittsund der Austrittsseite und andere voll erfüllt werden können.

Die Druckflüssigkeit steht im Anschluss an und drückt auf das zylinderartige Kopfteil des Ventilfedertellers, sodass dieser sich gegen die Kraft der Ventilfeder bewegen muss. Dieser Vorgang und das anschließende Abführen der Druckflüssigkeit am Ventilfederteller vorbei wird insbesondere dadurch möglich gemacht, dass im Anschluss und Kolben eine Sackbohrung mit den endseitigen Radialbohrungen als Eingangsseite ausgebildet ist, die bei Überlast durch Anheben des Ventilfedertellers und Überfahren der Dichtung mit den Austrittsbohrungen der Ausgangsseite verbunden sind. Dadurch, dass die Überlast also über die Sackbohrung auf den Ventilfederteller einwirkt und diesen anhebt macht dieser die Radialbohrungen, die das Ende der Sackbohrung bilden, auf, sodass die Druckflüssigkeit darüber möglichst direkt zu den Austrittsbohrungen und von da aus in die Atmosphäre gelangen kann. Der Anschluss mit dem zugeordneten Kolben übernimmt eine wesentliche Funktion des bisher bekannten Ventilkolbens, der in der Ventilbohrung verschieblich angeordnet ist, da er den Ventilfederteller beeinflusst und gleichzeitig den Weg für die Druckflüssigkeit bei Erreichen einer entsprechenden Überlast sicherstellt.

Bekannt sind Lösungen bei denen die frei werdende Druckflüssigkeit seitlich aus dem Anschluss austritt oder aber durch den Innenraum des Ventilgehäuses hindurch. Die Erfindung hat es aber als zweckmäßig angesehen, die Austrittsbohrungen im Anschluss parallel zu der Sackbohrung verlaufend auszubilden, um so einen optimal kurzen Weg für die Druckflüssigkeit vorgeben zu können. Die Druckflüssigkeit wird mit Überschreiten der Radialbohrungen durch die Dichtung bereits frei gelegt, sodass die Druckflüssigkeit dann schnell durch die Austrittsbohrungen abgeführt werden kann. Dabei hat es sich als besonders zweckmäßig erwiesen, zusätzlich zu den Austrittsbohrungen im Anschluss in der Wandung des Ventilgehäuses Bohrungen vorzusehen oder nur die Bohrungen im Ventilgehäuse als Austrittsbohrungen dienen zu lassen. Schon die Beschreibung verdeutlicht, dass auf kürzestem Wege die Druckflüssigkeit abgeführt und damit der Druck im System abgebaut werden kann. Weil hier mit dem beschriebenen Ventil große Mengen an Druckflüssigkeit in kurzer Zeit abzuführen sind, wird der Ausbildung von Bohrungen und Austrittsbohrungen sicherlich der Vorzug gegeben werden.

Der Aufbau des gesamten Druckbegrenzungsventils wird weiter dadurch vereinfacht, dass das Ventilgehäuse anschlussseitig einen Haltevorsprung aufweist, der eine korrespondierende Nase am Anschluss hintergreifend ausgebildet ist und dass am gegenüberliegenden Ende des Ventilgehäuses eine eindrehbare Federstellschraube angeordnet ist. Bei der Montage wird das Ventilgehäuse vom Anschluss her über diesen geschoben, dann die Ventilfeder eingeführt, die auf dem beweglichen Ventilfederteller ruht, um dann mit der Federstellschraube die Ventilfeder und damit die übrigen Teile gleichmäßig festzulegen. Über die Federstellschraube kann das Ventil dann auch gleichzeitig zweckmäßig eingestellt werden.

Eine andere Ausbildung ist die, bei der das am Ende geschlossen ausgebildete Ventilgehäuse und der Außenrand des Anschlusses korrespondierende Gewinde aufweisen. Hier wird durch Aufschrauben des Ventilgehäuses auf den Anschluss gleichzeitig auch die Ventilfeder und der Ventilfederteller festgelegt, wobei das Ventilgehäuse auch die Funktion der Federstellschraube mit übernehmen muss.

Aufgrund der besonderen Gegebenheiten im Steinkohlenbergbau wird der Durchmesser der zum Einsatz kommenden Stempel, insbesondere im Schildausbau immer größer, sodass auch die abzuführenden Mengen der Druckflüssigkeit immer mehr werden. Diesen besonderen Problemen begegnet die vorliegende Erfindung weiter dadurch, dass die Sackbohrung im Anschluss einen Durchmesser von 10 mm und mehr aufweist, sodass damit auch Hydraulikstempel mit 360 mm und mehr Kolbendurchmesser wirkungsvoll durch Druckbegrenzungsventile geschützt werden könne. Insgesamt können so 800 I pro Minute Druckflüssigkeit abgeführt werden, was ein rechtzeitiges und schnelles Entlasten derartiger Hydraulikaggregate möglich macht.

Die weiter vorn beschriebenen Bohrungen im Ventilgehäuse werden gegen Schmutz geschützt, indem die Austrittsbohrungen insbesondere die Bohrungen im Ventilgehäuse über einen flexiblen Dichtring von außen abgedeckt sind.

Das Einführen des Kolbens in den zylinderartigen Kopfteil des Ventilfedertellers wird dadurch erleichtert, dass die Kolbenspitze angeschrägt ausgebildet ist, sodass ein Verkanten beim Einführen in die entsprechende Öffnung des Kopfteils nicht auftreten kann.

Eine bestimmte Mindestgröße oder Ausgangsgröße der Dämpfungskammer wird dadurch vorgegeben und eingestellt, dass die Kolbenspitze einen die Ausgangsgröße der Dämpfungskammer vorgebenden Mindestabstand zum Innenraumtiefsten des zylinderartigen Kopfteils wahrend ausgebildet ist. Dadurch wird gleichzeitig auch wiederum ein Puffer gebildet, der ein Aufsetzen der einzelnen Teile verhindert, weil immer ein gewisser Druckflüssigkeitspuffer gewahrt bleibt. Abgesehen davon ist durch die geschilderten Versorgungswege immer ein direkter Kontakt zwischen der Dämpfungskammer und der Systemdruckflüssigkeit gewährleistet.

Die gleichmäßige Aufwärtsbewegung des zylinderartigen Kopfteils des Ventilfedertellers wird nach einer Ausbildung gezielt unterstützt, indem die Grundfläche des Ventilfedertellers am Außenrand eine Abschrägung aufweist, während sie im übrigen Bereich eben ist und ein sicheres Aufliegen des Ventilfedertellers auf dem Anschluss sicherstellt. Sowie bei dieser Ausbildung die Druckflüssigkeit die Radialbohrungen passiert und die erste Aufwärtsbewegung des Ventilfedertellers erreicht ist, drückt die durch den engen Spalt abfließende Druckflüssigkeit den Ventilfederteller hoch, wobei sich vorteilhaft auswirkt, dass durch die Abschrägung eine Aufwärtsbewegung vorgegeben bzw. unterstützt wird.

Bewusst soll nur ein Teil der Dichtung abdichten, was erfindungsgemäß dadurch erreicht ist, dass die Dichtung über die Kante in die Radialbohrungen vorstehend angeordnet ist. So ist eine optimale Dichtung gewährleistet, weil die Dichtung über die Druckflüssigkeit beaufschlagt gegen die Abdichtringfläche gedrückt wird.

Mit der beschriebenen Ausbildung einer Dämpfungskammer wird erreicht, dass die zwischen dem mit einer Sackbohrung und Radialbohrungen ausgerüsteten Anschluss und dem verschieblichen Verschlussteil sich bildende Dämpfungskammer direkt über eine Drosselbohrung mit der Sackbohrung und damit mit dem Systemdruck in Verbindung stehend ausgebildet ist. Sie kann zusätzlich über einen weiteren Versorgungsdurchfluss, der zwischen den Radialbohrungen, Kolbenspitze und der Innenwand des zylindrischen Kopfteils vom Verschlussteil ausgebildet und durch die Dichtung begrenzt ist, gefüllt und entlastet werden. Dadurch ist sicher gestellt, dass unabhängig von der Einbausituation des Druckbegrenzungsventils immer sichergestellt ist, dass die Dämpfungskammer schon bei Beginn des Öffnungsvorganges mit Druckflüssigkeit gefüllt ist und zwar dem Systemdruck, sodass sich Luftblasen oder sonstige Beeinträchtigungen nicht bilden können. Damit ist vorteilhaft verhindert, dass sich das Ventil selbst hydraulisch zerstört, sodass nicht nur längere Standzeiten erreicht werden, sondern vor allem eben immer ein voll wirksames und gedämpftes Druckbegrenzungsventil zur Verfügung steht. Da die Anordnung der abdichtenden Dichtung bzw. des entsprechenden Dichtungsringes unterhalb der Radialbohrungen vorgesehen ist, kann die Druckflüssigkeit auch durch die Radialbohrungen in den Zwischenraum zwischen Kolben und Ventilfederteller eindringen.

Ein sicheres Füllen der Dämpfungskammer wird so zusätzlich dadurch unterstützt, dass zwischen der Außenwand des Kolbens, zwischen den Radialbohrungen und Kolbenspitze, und der Innenwand des zylinderartigen Kopfteils der zusätzliche Versorgungsdurchfluss für die Direktversorgung der Dämpfungskammer ausgebildet ist. Über die doppelte Versorgung der Dämpfungskammer kann das Vorhalten einer entsprechend gefüllten Dämpfungskammer und damit eines immer wirksamen und einsatzbereiten Druckbegrenzungsventil erreicht werden. Während des Einsatzes des Druckbegrenzungsventils kann somit immer Systemdruck z. B. über die Drosselbohrung und der weitere Versorgungsdurchfluss auf die Dämpfungskammer einwirken bzw. die Dämpfungskammer ist mit entsprechender hoch gespannter Druckflüssigkeit gefüllt. Tritt dann die Situation ein, dass das Druckbegrenzungsventil aufgrund einer Überlast öffnet, wird über die Drosselbohrung weiter gefüllt und zwar zumindest so lange, bis die Radialbohrungen völlig frei sind und die Druckflüssigkeit am Ventilfederteller vorbei zu den Austrittsbohrungen bzw. Bohrungen strömen kann. Beim Wiederschließen des Druckbegrenzungsventil tritt dann die schon erwähnte Drosselung ein, weil die Feder zunächst einmal die Druckflüssigkeit aus der Dämpfungskammer herausdrücken muss, bevor die Ventilfeder den Ventilfederteller entsprechend verschiebt.

Die Erfindung zeichnet sich insbesondere dadurch aus, dass ein einfach bauendes und sicher arbeitendes Druckbegrenzungsventil geschaffen ist, das mit einer geschickt beaufschlagten Dämpfungskammer über eine direkte hydraulische Dämpfung verfügt und das mit nur wenigen sich bewegenden Teilen arbeitet. Dies führt zu einer verbesserten Ansprechgenauigkeit und damit Wirkungsweise des Druckbegrenzungsventils. Auch die Herstellung ist erleichtert, weil der Anschluss mit einer durchgehenden Axialbohrung bzw. einer Sackbohrung ausgerüstet werden kann, in der sich bewegende Teile nicht mehr vorhanden sind. Vielmehr ist der Kolben oder besser gesagt das Kolbenteil des Anschlusses selbst bzw. ein entsprechender Teilbereich im Spiel, auf dem dann der entsprechend ausgebildete Ventilfederteller sich bewegen kann, um über die Druckflüssigkeit angetrieben die Feder entsprechend vorzuspannen und die Eingangsseite mit der Ausgangsseite zu verbinden, so dass auftretende Druckflüssigkeitsspitzen abgebaut werden können. Alles erfolgt gleichmäßig und schnell, sodass auch durch die vorgegebenen Maße große Mengen, d. h. 800 I pro Minute und mehr abgeführt werden können. Eine schädliche Überlast kann sich nicht ungünstig auf das zugeordnete Hydraulikaggregat auswirken. Beim Wiederschließen des Druckbegrenzungsventils wird die Bewegung durch die Anordnung und Ausbildung der Dämpfungskammer so geregelt, dass ein Flattern des Ventils nicht auftreten kann, sondern vielmehr nur ein gleichmäßiges Entspannen der Ventilfeder eintritt und damit ein sanftes und gleichmäßiges und sicheres Schließen des Druckbegrenzungsventils.

Weitere Einzelheiten und Vorteile der Erfindung ergeben sich aus der nachfolgenden Beschreibung der zugehörigen Zeichnungen, in denen ein bevorzugtes Ausführungsbeispiel mit den dazu notwendigen Einzelheiten und Einzelteilen dargestellt ist. Es zeigen:
- Figur 1: ein Druckbegrenzungsventil im Schnitt mit Federstellschraube,
- Figur 2: ein Druckbegrenzungsventil, teilweise im Schnitt mit durchgehendem Ventilgehäuse,
- Figur 3: eine vergrößerte Wiedergabe von Ventilfederteller und Kolben im Schnitt, mit geschlossenem Kolben und
- Figur 4: eine vergrößerte Wiedergabe des Abdichtungsbereiches zwischen Ventilfederteller und Kolben.

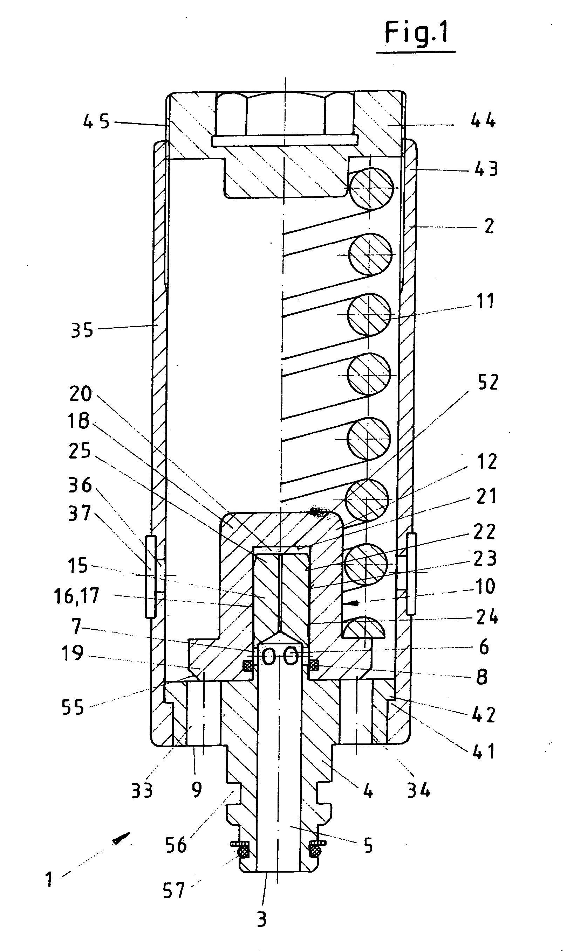

Figur 1 zeigt ein Druckbegrenzungsventil 1 im Schnitt, wobei das Ventilgehäuse 2 die Form einer Hülse aufweist. In diesem Ventilgehäuse 2 ist die Ventilfeder 11 mit dem Ventilfederteller 12 untergebracht, wobei der besonders geformte Ventilfederteller 12, der weiter hinten noch erläutert ist, auf den Anschluss 4 aufgesetzt ist und zwar so, dass er darauf verschieblich geführt ist. Hierzu verfügt der Anschluss 4 über einen Kolben 15, sowie den Abdichtbereich zwischen dem feststehenden Kolben 15 und dem beweglichen Ventilfederteller 12, der das so genannte Verschlussteil 10 bildet. Über dieses Verschlussteil 10 ist die Eingangsseite 3 des Ventilgehäuses 2 im Normalfall gegenüber der Ausgangsseite 9 verschlossen. Erst wenn im Bereich der Sackbohrung 5 des Anschlusses 4 ein entsprechend hoher Druck ansteht, beispielsweise in Folge eines Gebirgsschlages, drückt diese Druckflüssigkeit über die Radialbohrungen 6, 7 und die Kontaktflächen 16, 17 sowie die hier dargestellte Drosselbohrung 52 und die Dämpfungskammer 20 auf den Ventilfederteller 12 ein, sodass dieser unter Zusammendrücken der Ventilfeder 11 aus seiner in Figur 1 dargestellten Position herausbewegt wird. Mit dem Überfahren der hier mit 8 bezeichneten Dichtung kann dann die Druckflüssigkeit über die Radialbohrungen 6, 7 abströmen und über die Grundfläche 30 zu den Austrittsbohrungen 33, 34 strömen, sodass dann das System entlastet ist.

Der Ventilfederteller 12 verfügt über den Hutrand 19, auf den sich die Ventilfeder 11 abstützt, sowie ein zylinderartiges Kopfteil 18, von dem der Kolben 15 umfasst ist. Sowohl der Kolben 15 wie das zylinderartige Kopfteil 18 verfügen über Kontaktflächen 16, 17, die so glatt ausgebildet sind, dass mit der Stangendichtung bzw. der Dichtung 8 wirksam gearbeitet werden kann.

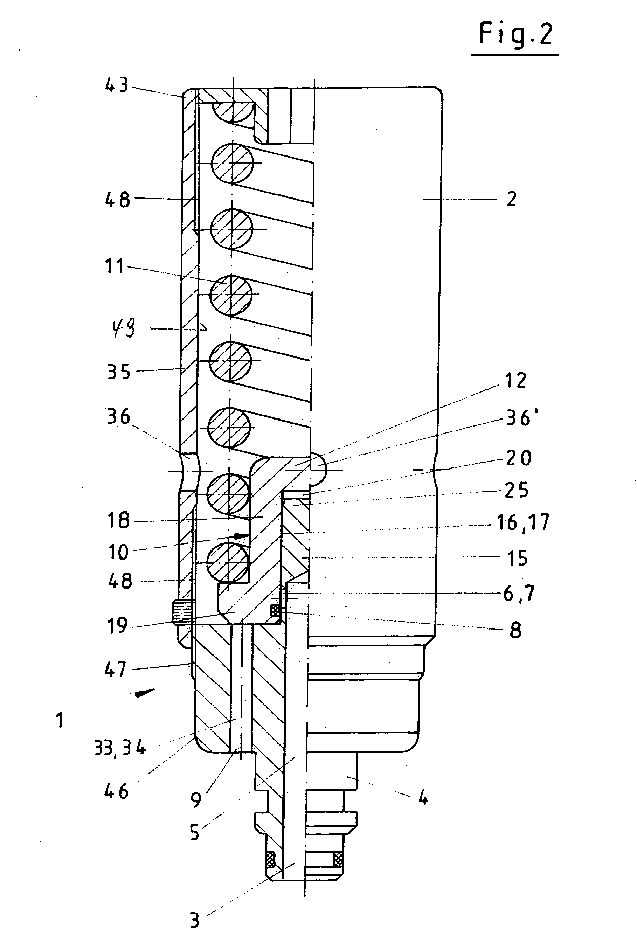

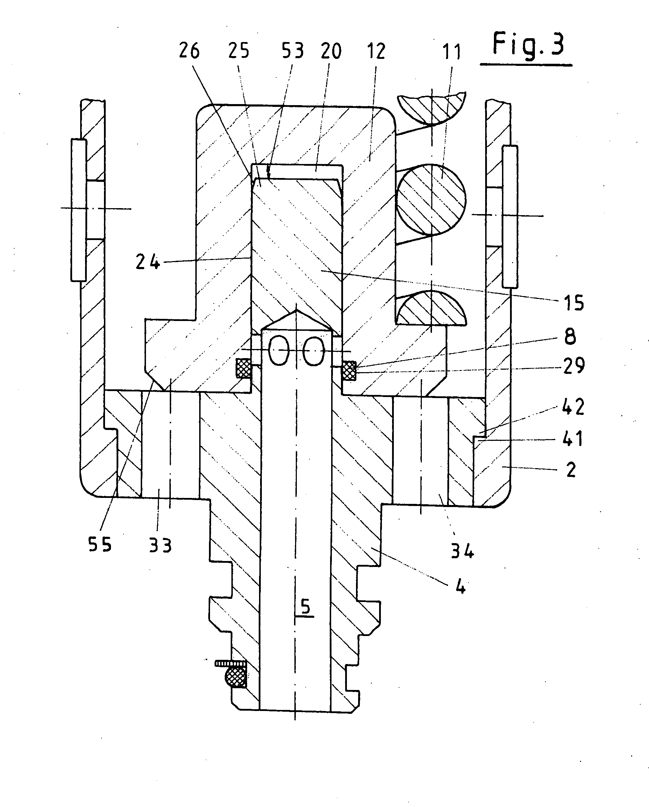

Bei der aus Figur 1 und auch der aus Figur 2 ersichtlichen Ausführung kann die in der Sackbohrung 5 anstehende Druckflüssigkeit mit Systemdruck an der Innenwand 22 und der Außenwand 23 vorbei, die eine Art Versorgungsdurchfluss 24 vorgeben, in das Innenraumtiefste 21 strömen, also in die Dämpfungskammer 20. Diese wird mit der Systemdruckflüssigkeit ausgefüllt und bleibt unter dem Einfluss des Systemdruckes während des gesamten Normalbetriebes eines zugeordneten Hydraulikaggregates. Zur besseren Einschubmöglichkeit des Kolbens 15 in das zylinderartige Kopfteil 18 ist die Kolbenspitze 25 mit Schrägen 26 versehen, was insbesondere Figur 3 entnommen werden kann.

Die Figuren 1 und 3 unterscheiden sich bezüglich der Ausbildung des Kolbens 15. Bei Figur 1 weist dieser Kolben 15 die schon erwähnte Drosselbohrung 52 auf, während er nach Figur 3 einen Block darstellt, sodass hier der Systemdruck nur zwischen Innenwand 22 und Außenwand 23, d. h. durch den Versorgungsdurchfluss 24 auf die Dämpfungskammer 20 einwirken kann. Umgekehrt wirkt sich die Dämpfung dann auch dadurch aus, dass beim Zusammenfahren der Ventilfeder 11 und damit beim Schließen des Druckbegrenzungsventils die in der Dämpfungskammer 20 anstehende Druckflüssigkeit über diesen Versorgungsdurchfluss 24 wieder abgeführt werden muss, sodass ein sehr hoher Dämpfungswert erreicht wird.

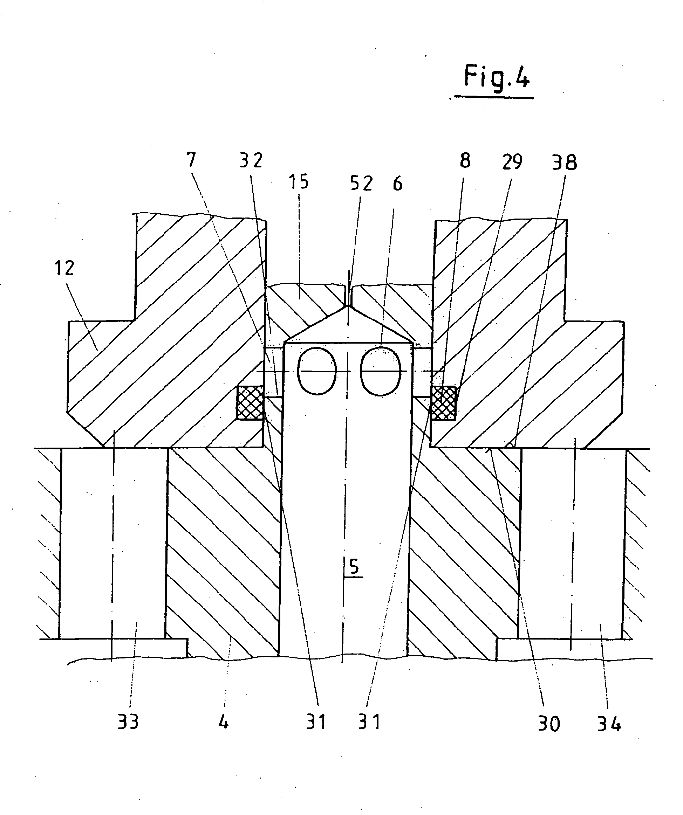

Die schon erwähnte Dichtung 8 ist in einer Nut 29 in der Innenwand 22 angeordnet und zwar so, dass im geschlossenen Zustand des Druckbegrenzungsventils 1 eine ausreichende Abdichtringfläche 31 vorgegeben ist. In der vergrößerten Wiedergabe nach Figur 4 ist gezeigt, dass dabei bewusst ein Teil der Dichtung 8 über die Kante 32 vorsteht, sodass nur ein Teil der Dichtung 8 abdichtet. Durch die besondere Anordnung der Dichtung bzw. ihre Positionierung wie in Figur 4 gezeigt wird erreicht, dass die Dichtung über die Druckflüssigkeit gegen die Abdichtringfläche 31 gedrückt wird, sodass eine immer optimale Dichtung gewährleistet ist.

Der Weg der Druckflüssigkeit beim Öffnen des Druckbegrenzungsventils 1 ist weiter vorne beschrieben worden. Diese Druckflüssigkeit gelangt nämlich nach Passieren der Radialbohrungen 6, 7 in den sich erweiternden Spalt zwischen Grundfläche 30 des zylinderartigen Kopfteils 8 und der Oberseite 38 des Anschlusses 4 zu den Austrittsbohrungen 33, 34. Darüber hinaus kann auch eine weitere Abführung der Druckflüssigkeit dadurch begünstigt werden, dass in der Wandung 35 des Ventilgehäuses 2 zusätzliche Bohrungen 36 vorgesehen sind. Diese Bohrungen 36 sind bei der aus Figur 1 ersichtlichen Ausführungsform über einen flexiblen Dichtring 37 verschlossen, sodass erst bei entsprechendem Überdruck in dem Innenraum des Ventilgehäuses 2 Druckflüssigkeiten auch über diesen Weg das System verlassen können.

Die Ausbildungen nach Figur 1 und Figur 2 unterscheiden sich im Wesentlichen dadurch, dass das Ventilgehäuse 2 auf unterschiedliche Art und Weise mit dem Anschluss 4 verbunden ist. Nach Figur 1 ist dem Ventilgehäuse 2 am unteren Ende ein Haltevorsprung 41 zugeordnet und dem Anschluss 4 eine korrespondierende Nase 42. Dadurch kann das Ventilgehäuse 2 über den Anschluss geschoben werden, bis Haltevorsprung 41 und Nase 42 wirksam werden. Am gegenüberliegenden Ende 43 ist eine Federstellschraube 44 vorgesehen, die nach Einlegen des Ventilfedertellers 12 und Einschieben der Ventilfeder 11 aufgedreht und eingedreht werden kann, um so die Kraft vorzugeben, die überwunden werden muss, bevor die Druckflüssigkeit durch Öffnen des Druckbegrenzungsventils 1 abgeführt werden kann.

Nach Figur 2 verfügen sowohl der Anschluss 4 am Außenrand 46 wie auch das Ventilgehäuse 2 am unteren Ende über korrespondierende Gewinde 47, 48, wobei das Gewinde 48 in der Gehäuseinnenwand 49 ausgebildet ist.

Die Federstellschraube 44 kann übrigens über das Gewinde 45 gegen die Kraft der Ventilfeder 11 in das Ventilgehäuse 2 eingeschraubt werden.

Weiter vorne ist bereits darauf hingewiesen worden, dass der Kolben 15, der Teil des Anschlusses 4 ist, unterschiedliche Ausbildungen aufweisen kann. In den Figuren 1 und 2 sowie Figur 4 ist die Ausbildung gezeigt, bei der eine Drosselbohrung 52 den direkten Kontakt zwischen Dämpfungskammer 20 und Sackbohrung 5 herstellt. Dabei ist der Kolben 15 so ausgebildet bzw. so lang ausgebildet, dass ein Mindestabstand 53 gemäß Figur 3 vorgegeben ist, der auch für die übrigen Ausbildungen sich als vorteilhaft ergibt.

Der Ventilfederteller 12 weist am Ende der Grundfläche 30 eine Abschrägung 55 auf, die die Hochhubwirkung des Ventilfedertellers 12 gezielt erbringt. Diese Abschrägung wirkt sich naturgemäß insbesondere dann aus, wenn die Bohrungen 36 in der Wandung 35 des Ventilgehäuses 2 zum Einsatz kommen.

Am unteren Ende verfügt der Anschluss 4 über einen Dichtring 57, sodass ein wirksamer Anschluss an das zu schützende Hydraulikaggregat möglich wird, wobei diese Verbindung über den Steckanschluss 56 bewirkt wird. In die hier wieder gegebenen Ausnehmungen des Anschlusses 4 wird eine hier nicht dargestellte Klammer eingeschoben, sodass auf einfache und schnelle Art und Weise eine Verbindung mit dem Hydraulikaggregat erreicht ist.

## Patentansprüche

1. Druckbegrenzungsventil zum Schutz von Hydraulikaggregaten gegen schädliche Überlast, insbesondere zum Schutz des hydraulischen Strebausbaus gegen Gebirgsschlag und andere plötzlich auftretende Überlast, mit einem Ventilgehäuse (2) mit Anschluss (4), wobei die Eingangs- (3) und Ausgangsseite (9) des Ventilgehäuses (2) durch ein gegen die Kraft einer Ventilfeder (11) verschiebliches und eine Dichtung (8) aufweisendes Verschlussteil (10) voneinander getrennt und bei auftretender Überlast zum Abführen der Druckflüssigkeit miteinander verbunden sind und wobei zwischen Eingangsseite (3) mit Zentralbohrung und Radialbohrungen (6, 7) und Ausgangsseite (9) eine Kammer vorgesehen und das Verschlussteil (10) von einem mit dem Anschluss (4) verbundenen Kolben (15) und dem diesen umfassenden und darauf verschieblich angeordneten und dementsprechend zylinderartig ausgebildeten Ventilfederteller (12) gebildet ist,
**dadurch gekennzeichnet,**
**dass** die Zentralbohrung als an den Radialbohrungen (6, 7) endende Sackbohrung (5) ausgebildet und direkt mit der als Dämpfungskammer (20) dienenden Kammer und/oder über einen Versorgungsdurchfluss (24) mit der Dämpfungskammer (20) verbunden ist, die somit mit dem Systemdruck in Verbindung stehend ausgebildet ist, dass Kolben (15) und Ventilfederteller (12) für Stangendichtungen vorgesehene und geeignete glatte Kontaktflächen (16, 17) aufweisen und dass die Dichtung (8) als Stangendichtung in einer Nut (29) angeordnet ist, die so positioniert ist, dass im geschlossenen Zustand des Druckbegrenzungsventils (1) eine ausreichende Abdichtringfläche (31) zu den im Kolben (15) ausgebildeten Radialbohrungen (6, 7) mit Sackbohrung (5) vorgegeben ist.

2. Druckbegrenzungsventil nach einem Anspruch 1,
**dadurch gekennzeichnet,**
**dass** der Kolben (15) ein Teil des Anschlusses (4) ist.

3. Druckbegrenzungsventil nach einem der vorhergehenden Ansprüche,
**dadurch gekennzeichnet,**
**dass** der Ventilfederteller (12) hutförmig mit Hutrand (19) ausgebildet ist, wobei sich die Ventilfeder (11) auf den Hutrand (19) abstützt.

4. Druckbegrenzungsventil nach einem der vorhergehenden Ansprüche,
**dadurch gekennzeichnet,**
**dass** im Anschluss (4) und Kolben (15) die Sackbohrung (5) mit den endseitigen Radialbohrungen (6, 7) als Eingangsseite (3) ausgebildet ist, die bei Überlast durch Anheben des Ventilfedertellers (12) und Überfahren der Dichtung (8) mit den Austrittsbohrungen (33, 34) der Ausgangsseite (9) verbunden sind.

5. Druckbegrenzungsventil nach einem der vorhergehenden Ansprüche,
**dadurch gekennzeichnet,**
**dass** die Austrittsbohrungen (33, 34) im Anschluss (4) parallel zu der Sackbohrung (5) verlaufend ausgebildet sind.

6. Druckbegrenzungsventil nach einem der vorhergehenden Ansprüche,
**dadurch gekennzeichnet,**
**dass** zusätzlich zu den Austrittsbohrungen (33, 34) im Anschluss (4) in der Wandung (35) des Ventilgehäuses (2) Bohrungen (36) vorgesehen sind oder dass nur die Bohrungen (36) im Ventilgehäuse (2) als Austrittsbohrungen dienen.

7. Druckbegrenzungsventil nach einem der vorhergehenden Ansprüche,
**dadurch gekennzeichnet,**
**dass** das Ventilgehäuse (2) anschlussseitig einen Haltevorsprung (41) aufweist, der eine korrespondierende Nase (42) am Anschluss (4) hintergreifend ausgebildet ist und das am gegenüberliegenden Ende (43) des Ventilgehäuses (2) eine eindrehbare Federstellschraube (44) angeordnet ist.

8. Druckbegrenzungsventil nach einem der vorhergehenden Ansprüche,
**dadurch gekennzeichnet,**
**dass** das am Ende (43) geschlossen ausgebildete Ventilgehäuse (2) und der Außenrand (46) des Anschlusses (4) korrespondierende Gewinde (45, 47) aufweisen.

9. Druckbegrenzungsventil nach einem der vorhergehenden Ansprüche,
**dadurch gekennzeichnet,**
**dass** die Sackbohrung (5) im Anschluss (4) einen Durchmesser von 10 mm und mehr aufweist.

10. Druckbegrenzungsventil nach einem der vorhergehenden Ansprüche,
**dadurch gekennzeichnet,**
**dass** die Austrittsbohrungen (33, 34) insbesondere die Bohrungen (36) im Ventilgehäuse (2) über einen flexiblen Dichtring (37) von außen abgedeckt sind.

11. Druckbegrenzungsventil nach einem der vorhergehenden Ansprüche,
**dadurch gekennzeichnet,**
**dass** die Kolbenspitze (25) angeschrägt ausgebildet ist.

12. Druckbegrenzungsventil nach einem der vorhergehenden Ansprüche,
**dadurch gekennzeichnet,**
**dass** die Kolbenspitze (25) einen die Ausgangsgröße der Dämpfungskammer (20) vorgebenden Mindestabstand (53) zum Innenraumtiefsten (21) des zylinderartigen Kopfteils (18) wahrend ausgebildet ist.

13. Druckbegrenzungsventil nach einem der vorhergehenden Ansprüche,
**dadurch gekennzeichnet,**
**dass** die Grundfläche (30) des Ventilfedertellers (12) am Außenrand (46) eine Abschrägung (55) aufweist.

14. Druckbegrenzungsventil nach Anspruch 1,
**dadurch gekennzeichnet,**
**dass** die Dichtung (8) über die Kante (32) der Radialbohrungen (6, 7) in diese vorstehend angeordnet ist.

15. Druckbegrenzungsventil nach einem der vorhergehenden Ansprüche,
**dadurch gekennzeichnet,**
**dass** die Dämpfungskammer (20) über eine Drosselbohrung (52) mit der Sackbohrung (5) verbunden ist.

16. Druckbegrenzungsventil nach Anspruch 15,
**dadurch gekennzeichnet,**
**dass** zwischen der Außenwand (23) des Kolbens (15) und der Innenwand (22) des zylinderartigen Kopfteils (18) zwischen den Radialbohrungen (6, 7) und der Kolbenspitze (25) ein weiterer Versorgungsdurchfluss (24) für die Direktversorgung der Dämpfungskammer (20) ausgebildet ist.

## Claims

1. Pressure relief valve to protect hydraulic units against damaging overload, in particular to protect hydraulic face supports against rock bursts and other suddenly occurring overloads, with a valve body (2) with end connection (4), whereby the inlet (3) and outlet side (9) of the valve body (2) are separated from one another through a closure part with a seal (8) that can be moved against the force of a valve spring (11) and are connected to one another when overload occurs to drain the pressure liquid, whereby between inlet side (3) with central bore hole and radial bore holes (6, 7) and outlet side (9) a chamber is provided and the closure part (10) is formed by a piston (15) connected to the end connection (4) and valve spring retainer (12) that surrounds the latter and that is slidably mounted on it and is correspondingly cylinder-shaped,
**characterised in that**
the central bore hole is formed as a blind hole (5) ending at the radial bore holes (6, 7) and is connected directly with the chamber serving as a damping chamber (20) and/or a supply flow (24) with the damping chamber (20), which is therefore formed connected with the system pressure, piston (15) and valve spring retainer (12) have smooth contact surfaces (16, 17) provided and suitable for rod seals and the seal (8) is located as a rod seal in a groove (29) that is positioned in such a way that in the closed position of the pressure relief valve (1) there is a sufficient sealing surface (31) to the radial bore holes (6, 7) with blind hole (5) formed in the piston (15).

2. Pressure relief valve in accordance with a claim 1,
**characterised in that**
the piston (15) is a part of the end connection (4).

3. Pressure relief valve in accordance with one of the previous claims,
**characterised in that**
the valve spring retainer (12) is formed in the shape of a hat with a hat brim (19), whereby the valve spring (11) is supported on the hat brim (19).

4. Pressure relief valve in accordance with one of the previous claims,
**characterised in that**
in the end connection (4) and piston (15) the blind hole (5) with the radial bore holes (6, 7) on the end side is formed as inlet side (3), which are connected on overload with the discharge bore holes (33, 34) of the outlet side (9) by raising the valve spring retainer (12) and moving over the seal (8).

5. Pressure relief valve in accordance with one of the previous claims,
**characterised in that**
the discharge bore holes (33, 34) in the end connection (4) are formed running parallel to the blind hole (5).

6. Pressure relief valve in accordance with one of the previous claims,
**characterised in that**
in addition to the discharge bore holes (33, 34) in the end connection (4) bore holes (36) are provided in the wall (35) of the valve body (2) or that only the bore holes (36) in the valve body (2) serve as discharge bore holes.

7. Pressure relief valve in accordance with one of the previous claims,
**characterised in that**
on the connection side the valve body (2) as a holding protrusion (41) that is formed to engage behind a corresponding catch (42) on the end connection (4) and that a spring set screw (44) that can be screwed in is located on the opposite end (43) of the valve body (2).

8. Pressure relief valve in accordance with one of the previous claims,
**characterised in that**
that the valve body (2) formed closed at the end (43) and the outer edge (46) of the end connection (4) have corresponding threads (45, 47).

9. Pressure relief valve in accordance with one of the previous claims,
**characterised in that**
the blind hole (5) in the end connection (4) has a diameter of 10 mm and more.

10. Pressure relief valve in accordance with one of the previous claims,
**characterised in that**
the discharge bore holes (33, 34) in particular the bore holes (36) in the valve body (2) are covered from outside by a flexible sealing ring (37).

11. Pressure relief valve in accordance with one of the previous claims,
**characterised in that**
the piston tip (25) is bevelled.

12. Pressure relief valve in accordance with one of the previous claims,
**characterised in that**
the piston tip (25) is formed to preserve a minimum clearance (53) to the deepest part of the inside (21) of the cylindrical head piece (18) that provides the starting size of the damping chamber (20).

13. Pressure relief valve in accordance with one of the previous claims,
**characterised in that**
the base surface (30) of the valve spring retainer (12) is bevelled (55) at the outer edge (46).

14. Pressure relief valve in accordance with claim 1,
**characterised in that**
the seal (8) is arranged projecting into the radial bore holes over the edge (32) of the radial bore holes (6, 7).

15. Pressure relief valve in accordance with one of the previous claims,
**characterised in that**
the damping chamber (20) is connected with the blind hole (5) via a restrictor bore hole (52.

16. Pressure relief valve in accordance with claim 15,
**characterised in that**
a further supply flow (24) for the direct supply of the damping chamber (20) is formed between the outer wall (23) of the piston (15) and the inner wall (22) of the cylindrical head part (18) between the radial bore holes (6, 7) and the piston tip (25).

## Revendications

1. Limiteur de pression destiné à protéger les groupes hydrauliques contre une surcharge nocive, notamment afin de protéger le soutènement d'étançon hydraulique contre les éboulements et autres surcharges survenant soudainement, avec un carter de soupape (2) avec raccordement (4), sachant que le côté de l'entrée (3) et celui de la sortie (9) du carter de soupape (2) sont séparés l'un de l'autre par une pièce de fermeture (10) pouvant être poussée contre la force d'un ressort de soupape (11) et présentant un joint (8), et sont reliées l'un à l'autre afin d'évacuer le liquide de pression en cas d'apparition d'une surcharge, et sachant qu'une chambre est prévue entre le côté de l'entrée (3) avec un orifice central et des orifices radiaux (6, 7) et le côté de la sortie (9), et que la pièce de fermeture (10) est formée par un piston relié (15) avec le raccordement (4) et par une coupelle de ressort de soupape (12) qui l'entoure et disposée dessus de façon à pouvoir glisser, et ayant en conséquence une forme de cylindre,
**caractérisé par le fait,**
**que** l'orifice central ayant la forme d'un orifice borgne (5) se terminant sur les orifices radiaux (6, 7) est directement relié avec la chambre servant de chambre d'amortissement (20) et/ou un passage d'alimentation (24), qui est ainsi réalisée debout en liaison avec la pression du système, que le piston (15) et la coupelle de ressort de soupape (12) présentent des surfaces de contact (16, 17) lisses prévues et adaptées pour des joints de tige et que le joint (8) est disposé en tant que joint de tige dans une rainure (29), qui est positionnée de façon à ce que, lorsque le limiteur de pression (1) est fermé, on dispose d'une surface de joint d'étanchéité (31) suffisante par rapport aux orifices radiaux (6, 7) avec orifice borgne (5) formés dans le piston (15).

2. Limiteur de pression selon la revendication 1,
**caractérisé par le fait,**
**que** le piston (15) représente une partie du raccordement (4).

3. Limiteur de pression selon une des revendications précédentes,
**caractérisé par le fait,**
**que** la coupelle de ressort de soupape (12) est réalisée avec la forme d'un chapeau avec bord de chapeau (19), sachant que le ressort de soupape (11) s'appuie sur le bord de chapeau (19).

4. Limiteur de pression selon une des revendications précédentes,
**caractérisé par le fait,**
**que** dans le raccordement (4) et le piston (15), l'orifice borgne (5) est formé avec les orifices radiaux (6, 7) du côté de l'extrémité en tant que côté de l'entrée (3), qui sont, en soulevant la coupelle de ressort de soupape (12) et en passant par-dessus le joint (8), reliés avec les orifices de sortie (33, 34) du côté de la sortie (9) en cas de surcharge.

5. Limiteur de pression selon une des revendications précédentes,
**caractérisé par le fait,**
**que** les orifices de sortie (33, 34) dans le raccordement (4) sont formés de façon à courir parallèlement à l'orifice borgne (5).

6. Limiteur de pression selon une des revendications précédentes,
**caractérisé par le fait,**
**qu'**en sus des orifices de sortie (33, 34) dans raccordement (4), des orifices (36) sont prévus dans la paroi (35) du carter de soupape (2) ou bien que seuls les orifices (36) dans le carter de soupape (2) servent d'orifices de sortie.

7. Limiteur de pression selon une des revendications précédentes,
**caractérisé par le fait,**
**que** le carter de soupape (2) présente, du côté du raccordement, une avance de maintien (41), qui prend la forme d'un nez (42) correspondant sur le raccordement (4) en prenant ce dernier par derrière, et qu'une vis d'arrêt (44) pouvant être arrêtée est disposée sur l'extrémité (43) se trouvant vis-à-vis du carter de soupape (2).

8. Limiteur de pression selon une des revendications précédentes,
**caractérisé par le fait,**
**que** le carter de soupape (2) formé de façon fermée à l'extrémité (43) et le bord extérieur (46) du raccordement (4) présentent des filetages (45, 47) correspondant.

9. Limiteur de pression selon une des revendications précédentes,
**caractérisé par le fait,**
**que** l'orifice borgne (5) dans le raccordement (4) présente un diamètre de 10 mm et plus.

10. Limiteur de pression selon une des revendications précédentes,
**caractérisé par le fait,**
**que** les orifices de sortie (33, 34), notamment les orifices (36) dans le carter de soupape (2) sont recouverts de l'extérieur par une bague de joint (37) flexible.

11. Limiteur de pression selon une des revendications précédentes,
**caractérisé par le fait,**
**que** la pointe du piston (25) est biseautée.

12. Limiteur de pression selon une des revendications précédentes,
**caractérisé par le fait,**
**que** la pointe du piston (25) est formée de façon à conserver la distance minimale (53) par rapport à la plus grande profondeur (21) de la pièce de tête (18) de forme cylindrique prescrivant la taille de sortie de la chambre d'amortissement (20).

13. Limiteur de pression selon une des revendications précédentes,
**caractérisé par le fait,**
**que** la surface de base (30) de la coupelle de ressort de soupape (12) présente un biseau (55) sur le bord extérieur (46).

14. Limiteur de pression selon la revendication 1,
**caractérisé par le fait,**
**que** le joint (8) est disposé par-dessus le bord (32) des orifices radiaux (6, 7) en étant situé devant ces derniers.

15. Limiteur de pression selon une des revendications précédentes,
**caractérisé par le fait,**
**que** la chambre d'amortissement (20) est reliée à l'orifice borgne (5) par l'intermédiaire d'un orifice d'étranglement (52).

16. Limiteur de pression selon la revendication 15,
**caractérisé par le fait,**
**qu'**entre la paroi extérieure (23) du piston (15) et la paroi intérieure (22) de la pièce de tête (18) en forme de cylindre, un autre passage d'alimentation (24) est constitué entre les orifices radiaux (6, 7) et la pointe du piston (25) pour l'alimentation directe de la chambre d'amortissement (20).
